# FASCICULE DE BREVET EUROPEEN

(11) **EP 1 794 429 B1**
(45) Date de publication et mention de la délivrance du brevet: **27.12.2017**
(21) Numéro de dépôt: 05799843.7
(22) Date de dépôt: 12.09.2005
(51) Int. Cl.: F02C 9/28, F02C 9/48, F02C 9/52

(54) **DISPOSITIF DE PROTECTION CONTRE LE GIVRAGE POUR MOTEURS D'AERONEFS ET PROCEDE DE DEGIVRAGE ASSOCIE**
VORRICHTUNG ZUM SCHUTZ GEGEN VEREISUNG FÜR FLUGTRIEBWERKE SOWIE VERFAHREN ZUR ENTEISUNG
DEVICE FOR PROTECTION AGAINST ICING FOR AIRCRAFT ENGINES AND RELATED DE-ICING METHOD

(30) Priorité: 21.09.2004 FR 0452110
(43) Date de publication de la demande: 13.06.2007
(73) Titulaire: AIRBUS OPERATIONS (S.A.S), 31060 Toulouse (FR)
(72) Inventeur: JACQUET-FRANCILLON, Pierre, F-31330 Grenade Sur Garonne (FR); CHENE, Gilles, F-31300 Toulouse (FR)
(74) Mandataire: Gicquel, Olivier Yves Gérard
(86) Numéro de dépôt international: PCT/FR2005/050733
(87) Numéro de publication internationale: WO 2006/032808

(56) Documents cités:
- EP-A- 1 495 963
- DE-A1- 3 333 437
- US-A- 3 541 540
- US-A- 4 782 331
- US-B1- 6 304 194
- US-B1- 6 560 551

## Description

La présente invention concerne un dispositif et un procédé de protection contre le givrage pour les moteurs des aéronefs.

Les aéronefs et notamment les aéronefs civils sont, du fait des contraintes d'exploitation et en particulier du fait des temps d'attente avant décollage, soumis à des temps d'exposition en conditions givrantes importants, moteurs tournant au ralenti.

Malgré le fonctionnement des moteurs, ces conditions ont pour effet de risquer d'accumuler des quantité importantes de givres dans les parties amont statiques ou non des moteurs et notamment sur les pales du compresseur basse pression communément appelé soufflante, qui tourne a faible vitesse moteur au ralenti, ou sur les parties fixes en aval de la soufflante ou la paroi interne de l'avant de la nacelle en particulier dans la zone entourant la soufflante.

Afin de limiter le givrage des moteurs, des procédures au sol existent pour assurer un dégivrage régulier des moteurs.

Ces procédures consistent à augmenter périodiquement le régime du moteur afin de centrifuger le givre accumulé sur les parties tournantes et d'augmenter la température d'écoulement d'air moteur en aval de la soufflante, ceci pour dégivrer la glace pouvant s'accumuler sur les parties fixes du moteur.

Ces procédures exigent de la part des équipages une surveillance du temps passé en conditions givrantes pendant les phases de roulage aussi bien à l'atterrissage qu'avant le décollage et de la température extérieure.

En outre, ces procédures réalisées de façon systématique dès que les conditions supposées de givrage sont atteintes ne tiennent pas compte de la quantité réelle de glace ou de givre accumulé et induisent une consommation accrue de carburant et une pollution inutile des aéroports.

Des dispositifs de détection de givre existent, par exemple US-A-4782331 pour la détection des conditions de givrage en vol. Ces systèmes sont basés sur une sonde munie d'un élément sensible au givre qui fournit une information lorsque l'aéronef traverse un nuage givrant.

Ces dispositifs, qui ont pour but principal d'avertir l'équipage mais qui peuvent également être utilisés pour enclencher automatiquement les systèmes de protection contre le givre de l'avion, comprennent une sonde nécessitant un écoulement d'air pour fournir une information fiable.

Une telle sonde peut en outre être installée dans l'entrée d'air moteur et être soumise au flux d'air aspiré par le moteur, ce qui permet également de fournir une information lorsque l'avion effectue des opérations au sol.

Là encore la sonde est utilisée pour fournir une alarme indiquant la présence de givre mais ne permet pas de déterminer la quantité de givre réelle accumulée.

On connait également par le document DE3333437, un dispositif de dégivrage d'entrée d'air comportant un système de dérivation d'une partie du flux chaud pour renvoyer au niveau de l'entrée d'air.

La présente invention a pour but de réaliser un dispositif de protection contre le givrage de parties de moteurs d'aéronefs comportant en premier lieu une détection de la quantité ou de l'épaisseur de glace accumulée afin de n'appliquer les procédures de dégivrage qu'en réponse à un givrage réel et déterminé.

Pour ce faire, la présente invention concerne en premier lieu un dispositif de protection contre le givrage de moteurs d'aéronefs caractérisé en ce qu'il comporte un capteur sensible à une quantité de glace accumulée disposé dans l'entrée d'air d'un moteur d'aéronef, un système de mesure de ladite quantité et de comparaison de ladite quantité à un seuil prédéterminé et un système déclencheur destiné à initier une réponse à une détection de franchissement du seuil prédéterminé. La réponse peut notamment comporter le déclenchement d'une alarme et/ou l'affichage au tableau de bord d'une consigne d'augmentation de régime moteur.

Selon un mode de réalisation avantageux, la présente invention a pour but de proposer un dispositif de protection contre le givrage de moteurs d'aéronefs permettant de décharger les pilotes de la tâche de surveillance des conditions de givrage moteur. Selon ce mode, le dispositif est relié à un système de contrôle moteur comportant des moyens de régulation du régime moteur, la réponse comportant une augmentation du régime moteur.

Préférentiellement, le système déclencheur et/ou le système de contrôle moteur sont reliés à des moyens de mesure de la température et comportent des moyens de gestion de la durée de l'augmentation du régime moteur en fonction de la température et de la quantité de glace mesurée.

L'invention comprend en outre la réalisation d'un procédé de dégivrage de moteur d'aéronef comportant principalement une étape de mesure d'une quantité de glace sur au moins une paroi d'un élément du moteur, une étape de comparaison de la quantité de glace mesurée à une quantité seuil prédéterminée une étape de déclenchement d'une réponse au franchissement du seuil prédéterminé et
une étape d'augmentation du régime moteur en réponse au franchissement du seuil déterminé.

Selon un mode de réalisation préférentiel de l'invention, le procédé comporte une étape de temporisation de l'augmentation du régime moteur par le système de contrôle moteur en fonction d'une mémorisation de paramètres représentatif de durées de conditions givrantes et d'adaptation de la temporisation en fonction desdits paramètres.

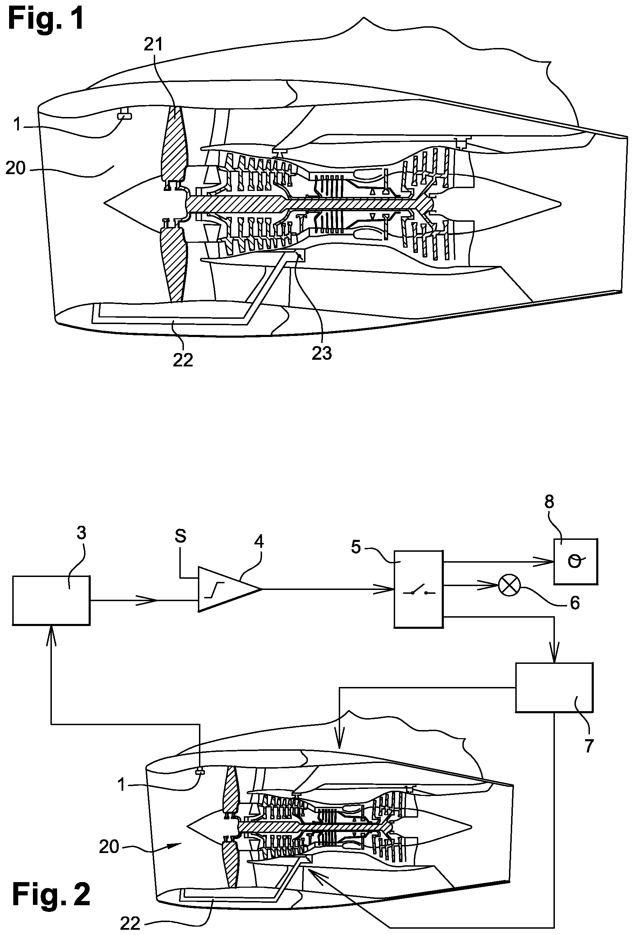

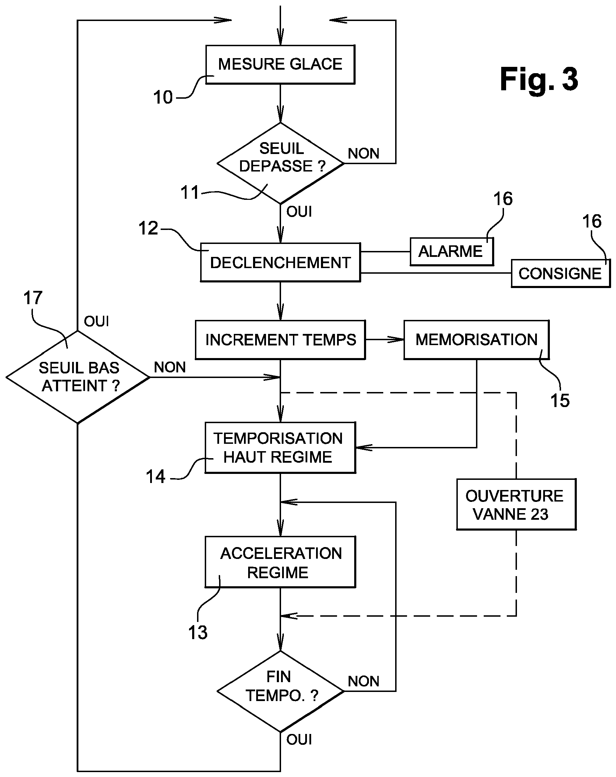

D'autres aspects et avantages de l'invention seront mieux compris à la lecture de la description qui va suivre d'un exemple de réalisation non limitatif de l'invention en référence aux figures qui représentent:
En figure 1: une vue schématique en coupe d'un moteur d'aéronef équipé d'un capteur selon l'invention;
en figure 2: une vue schématique d'un exemple de réalisation d'un dispositif selon l'invention;
en figure 3: une représentation schématique du procédé de dégivrage selon l'invention.

Comme vu précédemment, le dispositif de protection contre le givrage selon l'invention est basé sur une détection d'une quantité de glace accumulée au niveau d'un élément de l'entrée d'air 20 d'un moteur d'aéronef tel que représenté en figure 1. Pour ce faire le dispositif comporte au moins un capteur 1, sensible à une quantité de glace accumulée, disposé dans l'entrée d'air du moteur 2 à un emplacement représentatif par rapport au givrage de ce moteur.

L'emplacement représentatif pour le givrage est déterminé par des essais et des mesures en conditions givrantes, cet emplacement pouvant être devant la soufflante 21 comme représenté en figure 1 ou derrière cette soufflante selon la configuration du moteur concerné.

Le dispositif, plus précisément schématisé en figure 2, comporte un système de mesure 3 de la quantité de glace détectée par le capteur 1. Le système de mesure peut être intégré au boîtier du capteur ou disposé à proximité d'un système de contrôle moteur 7 tel qu'un calculateur de gestion du fonctionnement moteur.

Le dispositif comporte en outre un système de comparaison 4 de ladite quantité à un seuil S prédéterminé et un système déclencheur 5. Le système de comparaison peut être intégré au système de mesure 3 ou au système déclencheur 5, ce dernier étant pour sa part destiné à initier une réponse à une détection de franchissement du seuil prédéterminé.

Le seuil déterminé est une donnée comprise dans un calculateur de l'aéronef. Cette donnée peut être une donnée calculée à partir de données externes telles que le temps cumulé de roulage ou de fonctionnement moteur au ralenti et les conditions extérieures et notamment la température extérieure mais cette donnée peut être aussi une donnée fixe correspondant à une valeur limite maximale de glace acceptable par le moteur.

Par réponse on entend le déclenchement d'un processus destiné à dégivrer le moteur et, selon l'invention, la réponse apparaît sur une détection d'une quantité de glace.

Le processus le plus communément employé pour dégivrer le moteur est d'augmenter le régime moteur.

Selon un mode de réalisation simplifié, le système déclencheur 5 est relié à un dispositif d'alarme 6 au tableau de bord de l'aéronef, la réponse comportant le déclenchement du dispositif alarme 6 et/ou l'affichage au tableau de bord d'une consigne d'augmentation de régime moteur, les pilotes étant chargés de procéder à l'augmentation du régime moteur pour dégivrer ce dernier.

Dans ce cas le dispositif peut simplement comporter des moyens de détection de l'accélération moteur appliquée par les pilotes et être configuré pour maintenir l'alarme pendant une durée compatible avec un dégivrage correct du moteur en fonction de cette accélération.

Ce mode de réalisation a déjà comme avantage par rapport aux procédures antérieures de ne plus obliger les pilotes à surveiller les conditions de givrage et le temps passé moteur au ralenti, et, à initier des phases d'accélération moteur systématiques et périodiques mais, de leur permettre de n'initier ces phases de dégivrage qu'en temps utile.

Selon un mode de réalisation préférentiel, plus particulièrement l'objet de la figure 2, le système déclencheur 5 est relié en outre à un système de contrôle moteur 7 comportant des moyens de régulation du régime moteur, ladite réponse comportant une augmentation automatique du régime moteur temporisée par le système de contrôle moteur 7.

De préférence, le dispositif alarme reste présent car, comme l'augmentation du régime moteur nécessaire au dégivrage va jusqu'à 70% du régime N1 de la soufflante 21, il est souhaitable que les pilotes soient prévenus de la mise en fonction du dispositif.

Selon ce mode de réalisation, le régime moteur est automatiquement accéléré pour initier les phases de dégivrage, l'alarme étant dans ce cas une indication donnée aux pilotes qu'une phase de dégivrage commence ou va commencer afin de leur permettre par exemple de freiner l'avion.

Selon un premier mode de réalisation de l'invention, le système déclencheur 5 et/ou le système de contrôle moteur 7 sont reliés à des moyens 8 de mesure de la température d'entrée d'air moteur et comportent des moyens de gestion de durée de l'augmentation du régime moteur en fonction de la température et de la quantité de glace mesurées.

En effet, selon l'invention, une optimisation du procédé de dégivrage est prévue, cette optimisation consistant à limiter les phases d'accélération moteur sur une durée réellement nécessaire et suffisante à ce dégivrage, cette durée étant fonction non seulement de la quantité de glace accumulée au niveau de la partie surveillée mais aussi des conditions extérieures dont la sévérité peut être telle que d'autres zones risquent d'être fortement chargées en glace.

En mode de réalisation alternatif ou complémentaire, le dispositif est relié à un système 22 de prélèvement d'air chaud et de renvoi d'air chaud en amont du moteur. Ainsi le dispositif peut dans un premier temps ouvrir une vanne 23 de prélèvement d'air chaud, prélever de l'air chaud dans une partie chaude du moteur, typiquement un étage de compresseur basse ou moyenne pression sur lequel de l'air chaud peut être prélevé sans altérer le bon fonctionnement du moteur tout en optimisant le dégivrage des parties critiques du moteur sujettes à l'accumulation de glace en renvoyant cet air chaud sur ces dernières ou en amont de ces dernières.

L'usage d'un tel système de prélèvement d'air chaud piloté par le dispositif selon l'invention permet, sur un moteur qui en est équipé, de limiter ou même supprimer les phases d'accélération moteur et ainsi permet de réduire la consommation du moteur et les nuisances sonores.

Le dispositif selon l'invention peut en complément comprendre des moyens de mémorisation et des moyens de calcul configurés pour réaliser un cumul des durées correspondant à des conditions givrantes et adapter la temporisation de l'augmentation du régime moteur audit cumul. Ces moyens peuvent être inclus dans l'un desdits système de mesure 3 et système de contrôle moteur 7.

Le capteur 1 peut être constitué d'une sonde surfacique intégrée sur une surface du moteur soumise au givrage et mesurant une étendue de glace mais est préférentiellement constitué d'une sonde à doigt vibrant soumise au flux d'air entrant dans le moteur. Plusieurs capteurs peuvent être disposés à des endroits différents de l'entrée d'air.

La sonde à doigt vibrant est une sonde à capteur magnétostrictif comportant une tige cylindrique, vibrant sous l'action d'un circuit oscillateur électronique à une fréquence de l'ordre de 40Hz, et un circuit de détection de la fréquence de vibration de la sonde. La fréquence de vibration de la tige décroît en fonction de l'accrétion de glace sur le capteur ce qui donne une mesure de la quantité de glace dans la zone à surveiller et permet de déclencher le dispositif de dégivrage à partir d'un seuil de givrage choisi, soit prédéfini fixe soit défini dynamiquement en fonction des conditions d'exploitation de l'aéronef.

Ainsi le principe de fonctionnement du dispositif de dégivrage permet de mettre en oeuvre un procédé de dégivrage de moteur d'aéronef selon l'invention.

Ce procédé, schématisé de façon simplifiée à la figure 3, comporte une étape 10 de mesure d'une quantité de glace sur au moins une paroi d'un élément du moteur, une étape 11 de comparaison de la quantité de glace mesurée à une quantité seuil prédéterminée et une étape 12 de déclenchement d'une réponse au franchissement du seuil prédéterminé. La réponse peut être comme vu précédemment le déclenchement d'une alarme 16 mais, selon un mode de réalisation préféré, la réponse est une étape 13 d'augmentation du régime moteur en réponse au franchissement du seuil déterminé. Cette étape selon l'exemple a une durée dépendante de conditions mémorisées, le procédé comportant une étape 14 de temporisation de l'augmentation du régime moteur par le système de contrôle moteur en fonction de la mémorisation 15 de paramètres représentatif de durées de conditions givrantes et d'adaptation de la temporisation en fonction desdits paramètres.

Lorsque la temporisation est terminée ou lorsque la quantité de glace mesurée est revenue sous une limite inférieure (étape 17), le régime moteur est ramené au ralenti et le système est remis en conditions de veille.

L'invention n'est pas limitée au mode de réalisation décrit et notamment, le système de contrôle moteur peut comporter des moyens de détection d'évènements externes permettant d'annuler les consignes d'augmentation de régime moteur sur occurrence d'évènements externes tels que certaines action sur les commandes de la part des pilotes ou sur accélération manuelle du régime moteur.

## Revendications

1. Dispositif de protection contre le givrage de moteurs d'aéronefs comportant au moins un capteur (1), sensible à une quantité de glace accumulée, disposé, dans un état installé, dans l'entrée d'air d'un moteur (2) d'aéronef, un système de mesure (3) de ladite quantité et de comparaison (4) de ladite quantité à un seuil (S) prédéterminé et un système déclencheur (5) destiné à initier une réponse à une détection de franchissement du seuil prédéterminé **caractérisé en ce que** le système déclencheur (5) est relié à un système de contrôle moteur (7) comportant des moyens de régulation du régime moteur, ledit système de contrôle moteur (7) étant configuré pour initier une augmentation du régime moteur temporisée.

2. Dispositif selon la revendication 1 **caractérisé en ce que** le système déclencheur (5) est relié à un dispositif d'alarme (6) et/ou d'affichage d'une consigne d'augmentation de régime moteur au tableau de bord de l'aéronef, ladite réponse comportant le déclenchement du dispositif d'alarme (6) et/ou l'affichage de la consigne.

3. Dispositif selon la revendication 1 ou 2 **caractérisé en ce que** le système déclencheur (5) et/ou le système de contrôle moteur (7) sont reliés à des moyens (8) de mesure de la température d'entrée d'air moteur et comportent des moyens de gestion de durée de l'augmentation du régime moteur en fonction de la température et de la quantité de glace mesurées.

4. Dispositif selon la revendication 3 **caractérisé en ce qu'**au moins l'un desdits système de mesure et système de contrôle moteur comprend des moyens de mémorisation et des moyens de calcul configurés pour réaliser un cumul des temps correspondants à des conditions givrantes et adapter la temporisation de l'augmentation du régime moteur audit cumul.

5. Dispositif selon l'une quelconque des revendications précédentes **caractérisé en ce que** ledit capteur comporte une sonde surfacique intégrée sur une surface du moteur soumise au givrage et mesurant une étendue de glace.

6. Dispositif selon l'une quelconque des revendications précédentes **caractérisé en ce que** ledit capteur (1) comprend une sonde à doigt vibrant soumise au flux d'air entrant dans le moteur.

7. Dispositif selon l'une quelconque des revendications précédentes **caractérisé en ce que** le système déclencheur (5) est relié à un système (22) de prélèvement d'air chaud et de renvoi d'air chaud en amont du moteur.

8. Procédé de dégivrage de moteur d'aéronef **caractérisé en ce qu'**il comporte une étape (10) de mesure d'une quantité de glace sur au moins une paroi d'un élément du moteur, une étape (11) de comparaison de la quantité de glace mesurée à une quantité seuil prédéterminée et une étape (12) de déclenchement d'une réponse au franchissement du seuil prédéterminé **caractérisé en ce qu'**il comporte en outre une étape (13) d'augmentation du régime moteur en réponse au franchissement du seuil déterminé.

9. Procédé selon la revendication 8 **caractérisé en ce qu'**il comporte une étape (14) de temporisation de l'augmentation du régime moteur par le système de contrôle moteur en fonction d'une mémorisation (15) de paramètres représentatif de durées de conditions givrantes et d'adaptation de la temporisation en fonction desdits paramètres.

10. Procédé selon l'une quelconque des revendications 8 à 9 **caractérisé en ce qu'**il comporte une étape de renvoi d'air chaud en amont du moteur en réponse au franchissement du seuil déterminé.

## Patentansprüche

1. Schutzvorrichtung gegen die Vereisung von Luftfahrzeugmotoren, die mindestens einen auf eine angesammelte Eismenge ansprechenden Sensor (1), der im eingebauten Zustand im Lufteinlass eines Luftfahrzeugmotors (2) angeordnet ist, ein System (3) zur Messung der Menge und zum Vergleich (4) der Menge mit einer vorbestimmten Schwelle (S) und ein Auslösesystem (5) aufweist, das dazu bestimmt ist, eine Reaktion auf eine Erfassung des Überschreitens der vorbestimmten Schwelle zu einzuleiten, **dadurch gekennzeichnet, dass** das Auslösesystem (5) mit einem Motorsteuersystem (7) verbunden ist, das Regelungseinrichtungen der Motordrehzahl aufweist, wobei das Motorsteuersystem (7) konfiguriert ist, eine Erhöhung der verzögerten Motordrehzahl einzuleiten.

2. Vorrichtung nach Anspruch 1, **dadurch gekennzeichnet, dass** das Auslösesystem (5) mit einer Alarm- (6) und/oder Anzeigevorrichtung eines Sollwerts der Erhöhung der Motordrehzahl auf dem Armaturenbrett des Luftfahrzeugs verbunden ist, wobei die Reaktion das Auslösen der Alarmvorrichtung (6) und/oder die Anzeige des Sollwerts aufweist.

3. Vorrichtung nach Anspruch 1 oder 2, **dadurch gekennzeichnet, dass** das Auslösesystem (5) und/oder das Motorsteuersystem (7) mit Einrichtungen (8) zum Messen der Motorlufteinlasstemperatur verbunden sind und Verwaltungseinrichtungen der Dauer der Erhöhung der Motordrehzahl abhängig von der gemessenen Temperatur und Eismenge enthalten.

4. Vorrichtung nach Anspruch 3, **dadurch gekennzeichnet, dass** mindestens eines vom Messsystem und Motorsteuersystem Speichereinrichtungen und Recheneinrichtungen enthält, die konfiguriert sind, eine Kumulierung der Zeiten entsprechend Vereisungsbedingungen durchzuführen und die Verzögerung der Erhöhung der Motordrehzahl an die Kumulierung anzupassen.

5. Vorrichtung nach einem der vorhergehenden Ansprüche, **dadurch gekennzeichnet, dass** der Sensor eine flächenbezogene Sonde aufweist, die auf einer der Vereisung ausgesetzten Fläche des Motors eingebaut ist und eine Ausdehnung von Eis misst.

6. Vorrichtung nach einem der vorhergehenden Ansprüche, **dadurch gekennzeichnet, dass** der Sensor (1) eine Sonde mit vibrierendem Finger ist, die dem in den Motor eintretenden Luftstrom ausgesetzt ist.

7. Vorrichtung nach einem der vorhergehenden Ansprüche, **dadurch gekennzeichnet, dass** das Auslösesystem (5) mit einem System (22) zur Entnahme von Warmluft und zum Umlenken von Warmluft stromaufwärts vor den Motor verbunden ist.

8. Verfahren zur Enteisung eines Luftfahrzeugmotors, **dadurch gekennzeichnet, dass** es einen Schritt (10) des Messens einer Eismenge auf mindestens einer Wand eines Elements des Motors, einen Schritt (11) des Vergleichs der gemessenen Eismenge mit einer vorbestimmten Schwellenmenge und einen Schritt (12) des Auslösens einer Reaktion auf das Überschreiten der vorbestimmten Schwelle aufweist, **dadurch gekennzeichnet, dass** es außerdem einen Schritt (13) der Erhöhung der Motordrehzahl als Reaktion auf das Überschreiten der bestimmten Schwelle aufweist.

9. Verfahren nach Anspruch 8, **dadurch gekennzeichnet, dass** es einen Schritt (14) der Verzögerung de Erhöhung der Motordrehzahl durch das Motorsteuersystem abhängig von einer Speicherung (15) von Parametern, die für Dauern von Vereisungsbedingungen repräsentativ sind, und der Anpassung der Verzögerung abhängig von den Parametern aufweist.

10. Verfahren nach einem der Ansprüche 8 bis 9, **dadurch gekennzeichnet, dass** es einen Schritt des Umlenkens von Warmluft stromaufwärts vor den Motor als Reaktion auf das Überschreiten der bestimmten Schwelle aufweist.

## Claims

1. Device for protecting aircraft engines against icing, comprising at least one sensor (1), sensitive to an accumulated quantity of ice and arranged, in an installed state, in the air intake of an aircraft engine (2), a system for measuring (3) the said quantity and for comparing (4) the said quantity against a predetermined threshold (S), and a triggering system (5) intended to initiate a response to a detection that the predetermined threshold has been crossed, **characterized in that** the triggering system (5) is connected to an engine management system (7) comprising engine speed control means, the said engine management system (7) being configured to initiate a timed increase in engine speed.

2. Device according to Claim 1, **characterized in that** the triggering system (5) is connected to an alarm (6) and/or display device displaying an instruction to increase engine speed on the aircraft instrument panel, the said response comprising the triggering of the alarm device (6) and/or of the displaying of the instruction.

3. Device according to Claim 1 or 2, **characterized in that** the triggering system (5) and/or the engine management system (7) are connected to engine air inlet temperature measuring means (8) and comprise means of managing the length of time for which the engine speed is increased on the basis of the measured temperature and the measured quantity of ice.

4. Device according to Claim 3, **characterized in that** at least one of the said measurement and engine management systems comprises memory storage means and calculation means configured to keep a cumulative total of the times corresponding to icing conditions and to adapt the timed period for which engine speed is increased to suit the said cumulative total.

5. Device according to any one of the preceding claims, **characterized in that** the said sensor comprises a surface probe incorporated into a surface of the engine that is subject to icing and measuring an extent of ice.

6. Device according to any one of the preceding claims, **characterized in that** the said sensor (1) comprises a vibrating finger probe subjected to the stream of air entering the engine.

7. Device according to any one of the preceding claims, **characterized in that** the triggering system (5) is connected to a system (22) that bleeds hot air and returns the hot air to upstream of the engine.

8. Method for deicing an aircraft engine, **characterized in that** it comprises a step (10) of measuring a quantity of ice on at least one wall of one part of the engine, a step (11) of comparing the measured quantity of ice against a predetermined threshold quantity and a step (12) of triggering a response to the crossing of the predetermined threshold, **characterized in that** it further comprises a step (13) of increasing the engine speed in response to the crossing of the predetermined threshold.

9. Method according to Claim 8, **characterized in that** it comprises a step (14) of timing the period of increase in engine speed by the engine management system according to a stored value (15) of parameters indicative of the durations of icing conditions and of adapting the timed period to suit the said parameters.

10. Method according to either one of Claims 8 and 9, **characterized in that** it comprises a step of returning hot air to upstream of the engine in response to the crossing of the predetermined threshold.
